Europäisches Patentamt

European Patent Office

Office européen des brevets

(19)

(11) **EP 0 664 935 B1**

(12) **EUROPÄISCHE PATENTSCHRIFT**

(45) Veröffentlichungstag und Bekanntmachung des
Hinweises auf die Patenterteilung:
**05.06.1996 Patentblatt 1996/23**

(21) Anmeldenummer: **93921784.0**

(22) Anmeldetag: **04.10.1993**

(51) Int Cl.[6]: **H02M 3/337**

(86) Internationale Anmeldenummer:
**PCT/DE93/00928**

(87) Internationale Veröffentlichungsnummer:
**WO 94/09556 (28.04.1994 Gazette 1994/10)**

(54) **VERFAHREN ZUM BETREIBEN EINES SPANNUNGSWANDLERS SOWIE
SPANNUNGSWANDLER UND ANWENDUNG**

PROCESS FOR OPERATING A VOLTAGE CONVERTER, VOLTAGE CONVERTER AND ITS USE

PROCEDE PERMETTANT D'ACTIONNER UN TRANSFORMATEUR DE TENSION,
TRANSFORMATEUR DE TENSION ET UTILISATION

(84) Benannte Vertragsstaaten:
**DE FR GB IT NL**

(30) Priorität: **15.10.1992 DE 4234772**

(43) Veröffentlichungstag der Anmeldung:
**02.08.1995 Patentblatt 1995/31**

(73) Patentinhaber: **ROBERT BOSCH GMBH
70442 Stuttgart (DE)**

(72) Erfinder:
• **OHMS, Franz
D-74420 Oberrot (DE)**

• **GEILER, Martin
D-79215 Elzach-Brechtal (DE)**

(56) Entgegenhaltungen:
**EP-A- 0 407 691          WO-A-85/04060
WO-A-92/01355**

• **PATENT ABSTRACTS OF JAPAN vol. 14, no. 62
(E-883) 5 February 1990 & JP-A-01 283 086
(NIPPON) 14 November 1989**

EP 0 664 935 B1

**Beschreibung**

Die Erfindung geht aus von einem Verfahren zum Betreiben eines Gleichspannungswandlers, insbesonndere während eines Einschaltvorganges.

Aus der US 5,095,416 bzw. aus der entsprechenden EP 0 407 691 A1 ist ein Verfahren zur Strombegrenzung des Eingangsstromes eines Spannungswandlers, insbesondere eines Gegentaktgleichspannungswandlers, bekannt. Der Eingangsstrom wird in den beiden Gegentaktzweigen pro Schaltzyklus gemessen und aufintegriert. Aus dem aufintegrierten Signal wird ein Steuersignal für einen Pulsfrequenzmodulator abgeleitet, der die Einschaltzeiten der Gegentaktschalter des Spannungswandlers bestimmt. In Abhängigkeit des erfaßten Eingangsstromes werden somit die Einschaltzeiten der Gegentaktschalter nachgeregelt und zwar so, daß der arithmetische Mittelwert des Gegentaktwandlerstromes konstant bleibt.

Aus der WO 92/01355 ist ein Schaltnetzteil bekannt, bei dem der Schalttransistor so angesteuert wird, daß während der Einschaltphase dessen Einschaltzeit sukzessive verlängert wird, während die Ausschaltzeit konstant bleibt. Die Einschaltphase wird dort in mehrere Zeitintervalle unterteilt. Während den verschiedenen Zeitintervallen erfolgt eine Regelung derart, daß der Schalterstrom keine unzulässigen Werte annimmt.

Bei einer ähnlichen Lösung gemäß WO 85/04060 erfolgt eine Regelung in Abhängigkeit eines Fehlersignals, welches zur Änderung des Tastverhältnisses eines pulsmodulierten Steuersignals führt.

Schließlich zeigt die JP 1283086 eine Strombegrenzungseinrichtung für ein Netzteil, wobei während aer Startphase eine definierte Anzahl von Zeitabschnitten über gespeicherte Daten abgerufen werden. Auch dort erfolgt eine Regelung in Abhängigkeit einer ausgewerteten Fehlergröße.

Aufgabe vorliegender Erfindung ist es ein Verfahren zum Betreiben eines Gleichspannungswandlers für den Schaltbetrieb anzugeben, welches ein Energieaufnahmestrombegrenzung ohne Auswerte- und Regelschaltungen gestattet. Außerdem soll ein gleichspannungswandler zum Durchführen dieeses Verfahrens aufgezeigt werden. Diese Aufgabe wird bezüglich des Verfahrens durch den Anspruch 1 und bezüglich des Gleichspannungswandlers durch den Anspruch 3 gelöst. Die weiteren Ansprüche betreffen Ausgestaltungen des Verfahrens bzw. des Gleichspannungswandlers.

Im Gegensatz zur Realisierung gemäß US 5,095,416 sind bei der Erfindung keine Mittel zur Erfassung des Energieaufnahmestromes und zur Auswertung nötig. Bei der Erfindung wird die spannungswandlereigene Induktivität und/oder eine an den Spannungswandler angeschlossene Induktivität zur Stromanstiegsbegrenzung benutzt. Werden die kapazitiven Verbraucher, insbesondere während eines Einschaltvorgangs des Gleichspannungswandlers, mit einem konstanten Strom geladen, so wird sich die Ausgangsspannung rampenhaft erhöhen. Wenn dieser rampenhafte Anstieg in mehrere Teilphasen zerlegt wird, kann der Anstieg der Ausgangsspannung durch eine Treppenfunktion mit einer Stufenzahl entsprechend der Anzahl der Teilphasen angenähert werden. Die einzelnen Einschaltzeiten innerhalb der entsprechenden Teilphasen können nun so bemessen werden, daß der arithmetische Mittelwert des Gleichspannungswandlerstromes nahezu konstant bleibt und damit der Einschaltstrom nur wesentlich höher wird als ein vorgegebener Nennstrom. Beim Verfahren gemäß US 5,095,416 hingegen muß der Einschaltstrom merklich über dem Nennstrom liegen, damit eine gewisse Regelreserve, z.B. bei Alterung, Temperatureffekten, Bauelementetoleranzen, für den Begrenzerstrom gewährleistet ist. Das Verfahren gemäß der Erfindung ist unempfindlich gegen Regelschwankungen, Regelverzögerungen, usw. Das Verfahren eignet sich insbesondere für Satellitenstromversorgungen, z.B. für Wanderfeldröhrenverstärker, bei denen keine Ströme geduldet werden, die merklich über einem vorgegebenen Nennstrom liegen. Durch Abspeichern vorgegebener Kenndaten für die Einschaltzeiten lassen sich diese zuverlässig und unabhängig von fehleranfälligen Signalen reproduzieren.

Anhand der Zeichnungen werden Ausführungsbeispiele der Erfindung näher erläutert. Es zeigen

Fig. 1 ein Prinzipschaltbild eines Gegentaktgleichspannungswandlers,
Fig. 2 ein Ersatzschaltbild für den Transformator des Gegentaktgleichspannungswandlers,
Fig. 3 den zeitlichen Verlauf der Ausgangsspannung während eines Einschaltvorganges,
Fig. 4 den Gleichspannungswandlerstrom in einer ersten Teilphase,
Fig. 5 den Gleichspannungswandlerstrom in einer weiteren Teilphase,
Fig. 6 eine alternative Ausführungsform der Steuerung des Gleichspannungswandlers,
Fig. 7 den Betrieb des Gleichspannungswandlers über einen Vorregler.

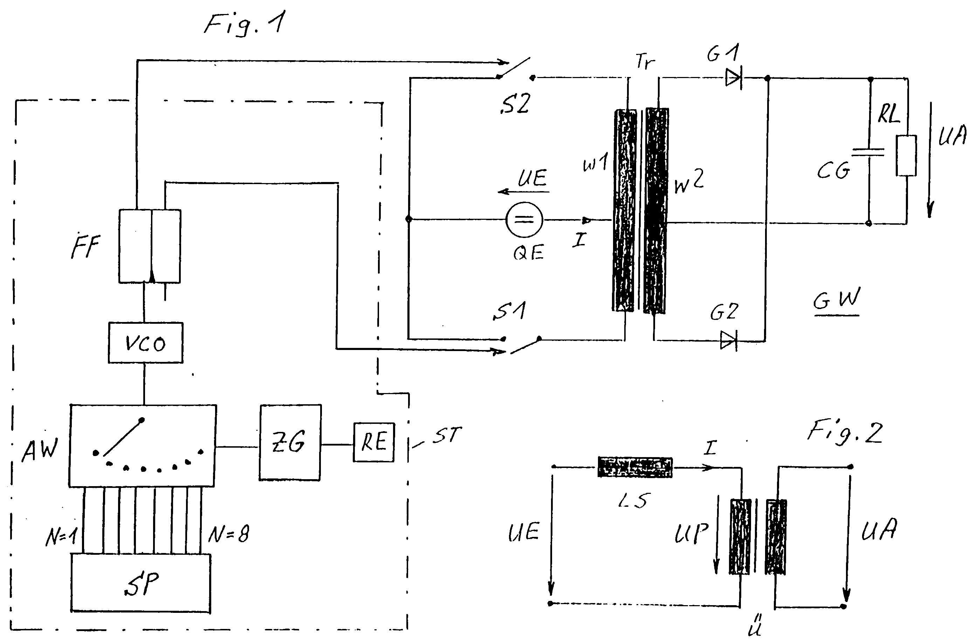

Das Prinzip der Erfindung wird nachfolgend anhand eines Gegentaktgleichspannungswandlers GW, der in Fig. 1 dargestellt ist, erläutert. Der Pluspol einer Eingangsgleichspannungsquelle QE, an der eine Eingangsgleichspannung UE abfällt, ist an die Mittelanzapfung der Primärwicklung w1 des Transformators Tr angeschlossen. Der Minuspol dieser Eingangsgleichspannungsquelle ist über den elektronischen Schalter S1 an das eine Ende dieser Primärwicklung w1 und über den elektronischen Schalter S2 an das andere Ende dieser Primärwicklung w1 angeschlossen. Die Sekundärwicklung w2 ist mit Gegentaktgleichrichtern G1 und G2 sowie einer Last RL mit Glättungskondensator CG

2

beschaltet. Der Transformator Tr kann durch sein Ersatzschaltbild (Fig. 2) dargestellt werden. In diesem Ersatzschaltbild erscheint die Streuinduktivität LS dieses Transformators und ein idealer Übertrager mit dem Übersetzungsverhältnis: UA/UP = Ü.

Die Ausgangsspannung UA wird sich beim Einschalten der Eingangsgleichspannungsquelle QE rampenhaft erhöhen (Fig. 3), wenn die kapazitiven Beschaltungselemente des Gleichspannungswandlers, hier symbolisch im Glättungskondensator CG zusammengefaßt, mit einem konstanten Strom I geladen werden. Die Streuinduktivität LS wird hier zur Begrenzung des Stromanstiegs dI/dt benutzt. Die Stromanstiegszeit TA (Fig. 3), d.h. die Zeitphase während der die Ausgangsspannung UA des Spannungswandlers infolge der Wirkung der Streuinduktivität LS linear ansteigt, wird nun in z.B. N = 8 gleiche Teilphasen - Zeitintervalle - unterteilt. Die Rampenspannung beim Anstieg wird nun durch eine Treppenfunktion mit N = 8 Stufen angenähert. Mit dieser Annäherung und der Streuinduktivität LS als wirksamer Induktivität Lw können nun die einzelnen Einschaltzeiten innerhalb der entsprechenden 8 Zeitintervalle so gewählt werden, daß der arithmetische Mittelwert des Stromes I nahezu konstant bleibt und damit der Einschaltstrom nicht höher wird als ein vorgegebener Nennstrom. Im ersten der 8 Zeitintervalle fällt die gesamte treibende Spannung an der Streuinduktivität LS ab.

Da UA = Ü · UP folgt:

$$UP = LS \cdot \frac{dI}{dt}$$

Für den Spitzenwert IS des Stromes I gilt:

$$IS = \frac{UP}{LS} \cdot T_{E1},$$

wobei $T_{E1}$ die Einschaltzeit des Spannungswandlers in der ersten der n-Teilphasen ist.

Der arithmetische Mittelwert $I_m$ des Stromes I pro Schaltzyklus ergibt sich zu:

$$Im = \frac{(IS/2) \cdot T_{E1}}{T_{E1} + T_L},$$

wobei $T_L$ die Lückzeit, d.h. die Zeit zwischen zwei Einschaltimpulsen des Spannungswandlers darstellt.

Mit der Beziehung für IP ergibt sich dann:

$$TE1 = \frac{I_m}{UP} \cdot LS \left( 1 + \sqrt{1 + \frac{2 \, T_L \cdot UP}{I_m \cdot LS}} \right)$$

Mit den Werten $I_m$ = 6A, UP = 50V, LS = 1μH, $T_L$ = 3μs ergibt sich $T_{E1}$ = 0,97 μs.

In Fig. 4 ist der Gleichspannungswandlerstrom I für diese erste Teilphase dargestellt.

In der zweiten Teilphase fällt nur noch 7/8 der treibenden Spannung an der Streuinduktivität ab. Für die dritte Teilphase entsprechend 6/8 usw.

Für die n-te Teilphase, n = 1,2,3,... N, gilt:

$$T_{En} = \frac{I_m \cdot LS}{UP \left( \frac{N-n+1}{N} \right)} \left( 1 + \sqrt{1 + \frac{2 \, T_L \cdot UP}{I_m \cdot LS} \cdot \frac{N-n+1}{N}} \right)$$

mit $T_{En}$ = Einschaltzeit des Spannungswandlers in der n-ten Teilphase,
N = Anzahl der Teilphasen, z.B. N = 8.
Für n gilt: $n \in \mathbb{N}$   und $n \leq N$.

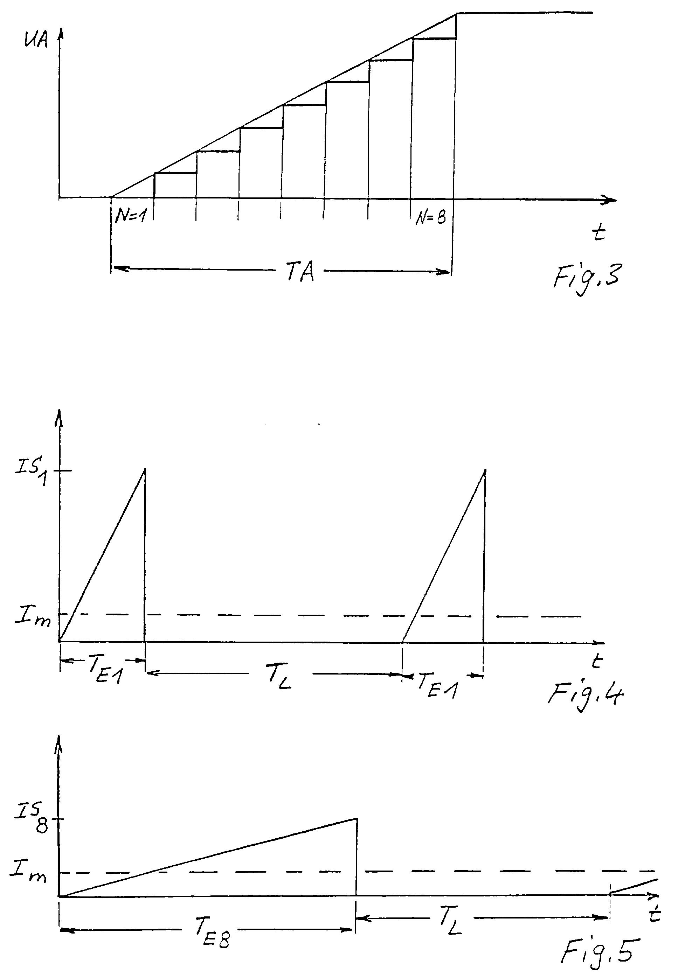

Beispielsweise erhält man mit obigen Werten $T_{E8}$ = 3,5 μs. In Fig. 5 ist der Stromverlauf für diese Teilphase N = 8 dargestellt.

Die Zeitdauer der Rampe, d.h. die Zeitphase während der die Ausgangsspannung des Spannungswandlers infolge der Induktivität (hier die Streuinduktivität des Transformators) zunimmt, ist abhängig von den ausgangsseitigen kapazitiven Beschaltungselementen, einem eventuellen kapazitiven Anteil der Last, sowie von dem arithmetischen Mittelwert des Stromes, der zulässig sein soll. Für die Anstiegszeit TA (Fig. 3) gilt demnach

$$TA \sim \frac{CG \cdot UA}{I_m},$$

wobei in CG alle ausgangsseitigen kapazitiven Anteile vereinigt sein sollen. Die Zahl N der zu wählenden Zeitintervalle (Teilphasen) ist davon abhängig wie genau die Annäherung der Treppenfunktion an die Rampe (Fig. 3) sein soll. Für eine typische Hochspannungsstromversorgung eines Wanderfeldröhrenverstärkers sind N = 8 Zeitintervalle ausreichend. Mit TA ≃ 8ms und N = 8 ergibt sich eine Intervallzeit einer Teilphase zu 1 ms.

Zur Realisierung des Verfahrens nach der Erfindung ist eine Steuereinrichtung ST vorgesehen zur Abgabe der Einschaltpulse. Da es sich beim Ausführungsbeispiel gemäß Fig. 1 um einen Gegentaktgleichspannungswandler handelt, müssen zwei Schalter S1 und S2 angesteuert werden. Für beide Schalter werden innerhalb einer Teilphase Einschaltpulse gleicher Länge erzeugt, die jedoch gegenphasig aufbereitet werden. Die Lückzeit $T_L$ zwischen zwei gegenphasigen Pulsen wird konstant gehalten (vgl. EP 77 958 B1). Zur Aufbereitung kann ein üblicher Pulsfrequenzmodulator verwendet werden, oder in einer volldigitalen Realisierung eine Verknüpfungslogik, die aus einem Takt von beispielsweise 5 MHz die entsprechenden Verknüpfungen während der Anstiegszeit TA, die zuvor z.B.. in einem Testbetrieb ermittelt wird, vornimmt. Jede Millisekunde wird, beispielsweise gesteuert über einen Taktzähler, die Einschaltzeit $T_{En}$ auf einen wie zuvor berechneten höheren Wert eingestellt.

Wie Fig. 1 zeigt, können die Kennwerte für die z.B. N = 8 verschiedenen Einschaltzeiten für die unterschiedlichen Teilphasen in einem Speicher SP zuvor abgelegt werden und über eine Auswahlschaltung AW an den frequenzbestimmenden Eingang eines frequenzsteuerbaren Oszillators VCO weitergeleitet werden. Die Auswahlschaltung AW ist von einem Zeitgeber ZG gesteuert, der nach jeweils einer Millisekunde einen der 8 Kennwerte an den Oszillator VCO weiterschaltet und so die zuvor abgeleiteten Einschaltzeiten für die Schalter S1 und S2 bestimmt. Zur Aufbereitung der Gegentaktimpulse ist dem Oszillator VCO ein Flip-Flop FF nachgeschaltet. Am Ende eines Anstiegs der Ausgangsspannung UA (Fig. 3) wird der Zeitgeber ZG über eine Rücksetzeinrichtung RE und damit auch die Auswahlschaltung AW zurückgesetzt, um für einen erneuten Anstieg der Ausgangsspannung UA wiederum verschiedene Einschaltzeiten $T_{En}$ bereitzustellen.

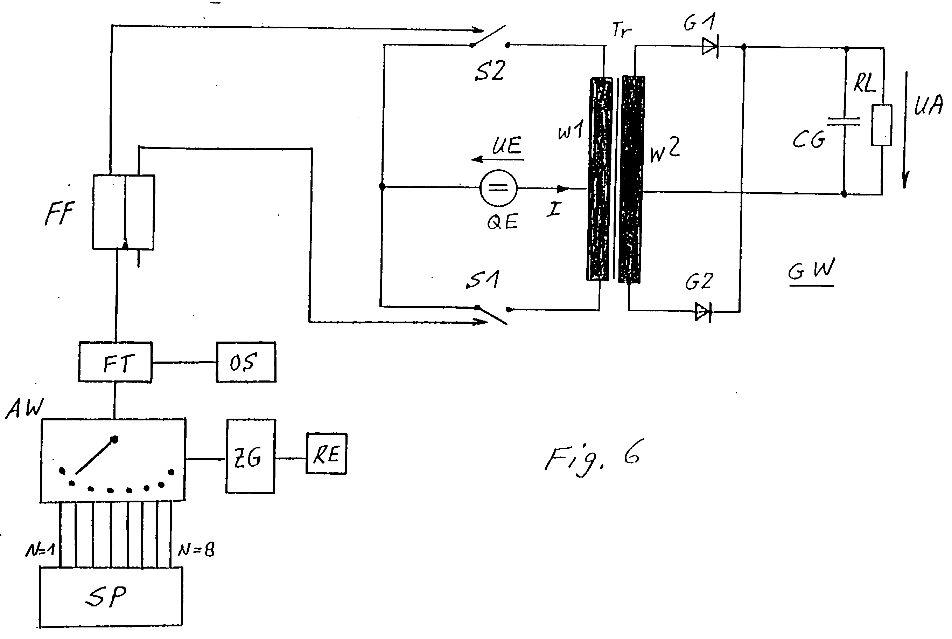

Alternativ zur Realisierung gemäß Fig. 1 kann der Oszillator auch als Festfrequenzoszillator OS aufgebaut sein (Fig. 6) mit einem nachgeschalteten Frequenzteiler FT, dessen Teilerverhältnis einstellbar ist. Über die Auswahlschaltung AW wird dann für jeden Kennwert ein anderes Teilerverhältnis eingestellt.

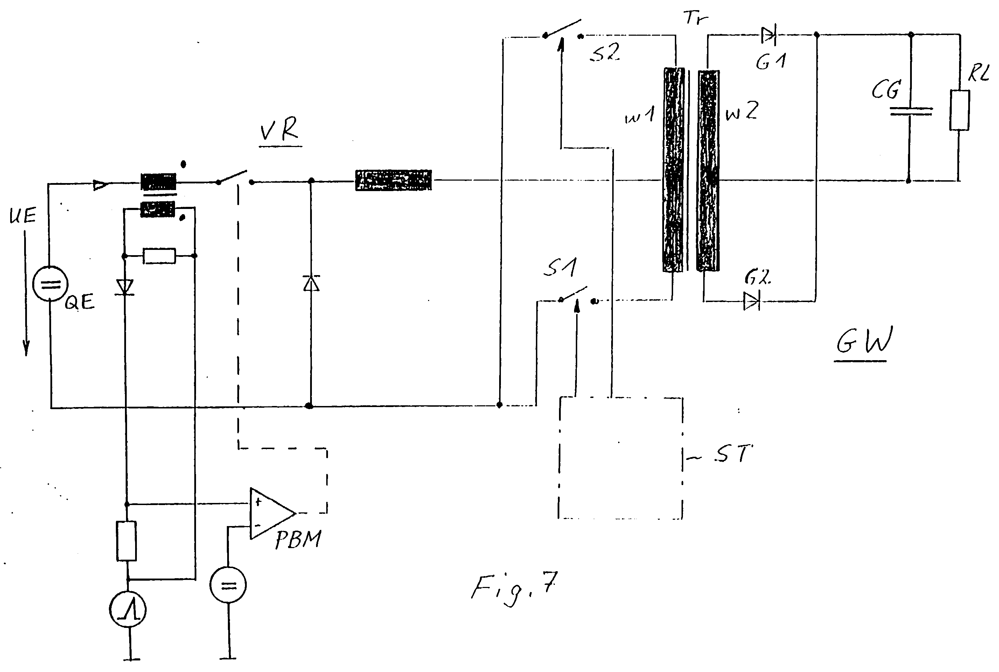

Der dargestellte Gegentaktwandler GW kann auch über einen Vorregler VR (Fig. 7) betrieben werden. Die Einschaltimpulse für die Schalter S1 und S2 werden wir zuvor nur während der Anstiegszeit TA verändert. Die Lückzeit $T_L$ wird konstant gehalten. Nach Beendigung einer solchen Einschaltphase arbeitet der Gegentaktwandler mit konstanten Einschalt- und Ausschaltimpulsen. Eine Regelung wird nur noch über den Vorregler VR vorgenommen, der als Schaltregler mit Pulsbreitenmodulation (PBM) oder Pulsfrequenzmodulation aufgebaut sein kann.

Die Arbeitsweise eines solchen Vorreglers VR ist beispielsweise in der P 41 20 147.7 beschrieben.

**Patentansprüche**

1. Verfahren zum Betreiben eines Gleichspannungswandlers für den Schaltbetrieb, während eines Einschaltvorgangs, mit folgenden Schritten:

   - Unterteilen einer Zeitphase, während der die Ausgangsspannung des Spannungswandlers infolge einer spannungswandlereigenen und/oder einer an den Spannungswandler angeschlossenen Induktivität zunimmt, in mehrere Teilphasen,
   - innerhalb jeder Teilphase, in der der bzw. die elektronischen Schalter des Gleichspannungswandler mehrmals ein- und ausgeschaltet werden, werden die Einschalt- und Ausschaltzeiten jeweils konstant gewählt,
   - Bemessen der Einschaltzeiten des Spannungswandlers von Teilphase zu Teilphase mit unterschiedlichen Werten in Abhängigkeit der wirksamen Induktivität und zwar so, daß der Mittelwert des Energieaufnahmestromes des Spannungswandlers in den Teilphasen einen vorgegebenen Grenzwert nicht übersteigt.

2. Verfahren nach Anspruch 1, gekennzeichnet durch folgende Bemessung der Einschaltzeiten des Spannungswandlers in einer Zeitphase:

$$T_{En} = \frac{I_m \cdot L_w}{UP\left(\frac{N-n+1}{N}\right)} \left( 1 + \sqrt{1 + \frac{2\,T_L \cdot U_L}{I_m \cdot L_w} \cdot \frac{N-n+1}{N}} \right)$$

mit N = Anzahl der verschiedenen Teilphasen,
n = laufender Index der Teilphasen n = 1,2...N,
$T_{En}$ = Einschaltzeit des Spannungswandlers in der n-ten Teilphase,

$I_m$ = Mittelwert des Energieaufnahmestromes des Spannungswandlers,

$L_w$ = wirksame spannungswandlereigene Induktivität und/oder an den Spannungswandler angeschlossene Induktivität,

UP = Differenzspannung zwischen der Eingangsspannung des Gleichspannungswandlers und der an der wirksamen Induktivität

$L_w$ abfallenden Spannung,

$T_L$ = Lückenzeit; d.h. Zeit zwischen zwei Einschaltimpulsen des Spannungswandlers.

3. Gleichspannungswandler zum Durchführung des Verfahrens nach Anspruch 1 bestehend aus:

- einem induktiven Speicherelement (LS),
- mindestens einem elektronischen Schalter (S1, S2),
- einer Steuereinrichtung (ST) für diesen/diese elektronischen Schalter (S1, S2) zur Abgabe von Einschaltpulsen für diese/diesen elektronischen Schalter, wobei die Steuereinrichtung (SP, AW, OS, VCO) über mindestens einen Speicher (SP) verfügt, in welchem Kennwerte für die Länge der Einschaltpulse unterschiedlicher Teilphasen abspeicherbar sind und eine Auswahlschaltung (AW) vorgesehen ist zur Weiterleitung der abgespeicherten Kennwerte an einen Oszillator (OS, VCO), über den die Einschaltpulse für den/die elektronischen Schalter (S1, S2) ableitbar sind.

4. Gleichspannungswandler nach Anspruch 3, gekennzeichnet durch einen frequenzsteuerbaren Oszillator (VCO), dessen frequenzbestimmender Eingang mit der Auswahlschaltung (AW) verbunden ist.

5. Gleichspannungswandler nach Anspruch 3, gekennzeichnet durch einen Festfrequenzoszillator mit einem Frequenzteiler (FT), dessen teilerverhältnisbestimmender Eingang mit der Auswahlschaltung (AW) verbunden ist.

6. Gleichspannungswandler nach einem der Ansprüche 3 bis 5, dadurch gekennzeichnet, daß der Gleichspannungswandler als Gegentaktwandler (GW) ausgeführt ist, dessen wirksame Induktivität im wesentlichen durch seine Transformatorstreuinduktivität (LS) vorgegeben ist und dessen Lückzeit konstant gewählt ist.

7. Gleichspannungswandler nach einem der Ansprüche 3 bis 5, dadurch gekennzeichnet, daß der Gleichspannungswandler als Gegentaktwandler (GW) ausgeführt ist, der über einen Vorregler (VR) betreibbar ist, wobei die Einschaltzeiten des Gegentaktwandlers (GW) nur während eines Einschaltvorganges in Teilphasen unterschiedlich lang gewählt sind und nach Ablauf dieser Einschaltphase auf einen konstanten Wert umgeschaltet werden.

## Claims

1. Method for operating a DC-DC converter for switching operation, during a switching-on operation, having the following steps:

   - subdividing into a plurality of subphases a time phase during which the output voltage of the voltage transformer increases owing to an inductor dedicated to the voltage transformer and/or an inductor connected to the voltage transformer,
   - the switching-on and switching-off times are respectively selected to be constant within each subphase in which the electronic switch or switches of the DC-DC voltage converter are switched on and off several times,
   - dimensioning the switching-on times of the voltage transformer from subphase to subphase with different values as a function of the effective inductance, specifically in such a way that the average value of the input current of the voltage transformer does not exceed a prescribed limiting value in the subphases.

2. Method according to Claim 1, characterized by the following dimensioning of the switching-on times of the voltage transformer in a time phase:

$$T_{En} = \frac{I_m \cdot L_w}{UP\left(\frac{N-n+1}{N}\right)} \left( 1 + \sqrt{1 + \frac{2\, T_L \cdot U_L}{I_m \cdot L_w} \cdot \frac{N-n+1}{N}} \right)$$

where N = the number of different subphases,

n = serial index of the subphases n = 1,2...N,

$T_{En}$ = switching-on time of the voltage transformer in the nth subphase,

$I_m$ = mean value of the input current of the voltage transformer,

$L_w$ = effective inductor dedicated to the voltage transformer and/or inductor connected to the voltage transformer,

UP = differential voltage between the input voltage of the DC-DC converter and the voltage dropping across the effective inductor $L_w$,

$T_L$ = gap time; that is to say, time between two switching-on pulses of the voltage transformer.

3. DC-DC converter for carrying out the method according to Claim 1, comprising:

- an inductive storage element (LS),
- at least one electronic switch (S1, S2),
- a control device (ST) for that/those electronic switch(es) (S1, S2), for outputting switching-on pulses for that/those electronic switch(es), the control device (SP, AW, OS, VCO) having at least one memory (SP) in which it is possible to store characteristic values for the length of the switching-on pulses of different subphases, and a selector module (AW) being provided for the purpose of relaying the stored characteristic values to an oscillator (OS, VCO) via which the switching-on pulses can be derived for the electronic switch(es) (S1, S2).

4. DC-DC converter according to Claim 3, characterized by a frequency-controllable oscillator (VCO) whose frequency-determining input is connected to the selector module (AW).

5. DC-DC voltage converter according to Claim 3, characterized by a fixed-frequency oscillator having a frequency divider (FT) whose divider-ratio-determining input is connected to the selector module (AW).

6. DC-DC voltage converter according to one of Claims 3 to 5, characterized in that the DC-DC voltage converter is designed as a push-pull converter (GW) whose effective inductance is essentially prescribed by its transformer leakage inductance (LS) and whose gap time is selected to be constant.

7. DC-DC voltage converter according to one of Claims 3 to 5, characterized in that the DC-DC voltage converter is designed as a push-pull converter (GW) which can be operated via a pre-regulator (VR), the switching-on times of the push-pull converter (GW) being selected with different lengths in subphases only during one switching-on operation and being switched over to a constant value after the expiry of this switching-on phase.

**Revendications**

1. Procédé de mise en oeuvre d'un transformateur de tension continue pour le mode de fonctionnement en découpage, au cours d'une opération de branchement, et mettant en oeuvre les étapes suivantes :

- subdivision d'une phase de temps au cours de laquelle la tension de sortie du transformateur de tension augmente à cause d'une inductance propre au transformateur de tension et/ou reliée au transformateur de tension, en plusieurs phases partielles,
- à l'intérieur de chaque phase partielle au cours de laquelle le ou les commutateurs électroniques du transformateur de tension continue sont plusieurs fois fermés et ouverts, on choisit chaque fois constant le temps de fermeture et le temps d'ouverture,
- on dimensionne les temps de fermeture du transformateur de tension d'une phase partielle à l'autre avec des valeurs différentes en fonction de l'inductance effective et cela pour que la valeur moyenne du flux d'énergie reçu par le transformateur de tension au cours des phases partielles ne dépasse pas une valeur limite prédéterminée.

2. Procédé selon la revendication 1, caractérisé en ce qu'on dimensionne les temps de fermeture du convertisseur de tension au cours d'une phase de temps :

$$T_{En} = \frac{I_m \cdot L_w}{UP\left(\dfrac{N - n + 1}{N}\right)}\left(1 + \sqrt{1 + \frac{2\ T_L \cdot U_L}{I_m \cdot L_w} \cdot \frac{N - n + 1}{N}}\right)$$

N = nombre de phases partielles différentes,

n = indice courant des phases partielles ; n = 1,2...N,

$T_{En}$ = temps de fermeture du transformateur de tension au cours de la phase partielle d'ordre n,

$I_m$ = valeur moyenne du flux d'énergie reçu par le transformateur de tension,

$L_w$ = inductance efficace propre au transformateur de tension et/ou inductance reliée au transformateur de tension,

UP = tension de différence entre la tension d'entrée du transformateur de tension continue et l'inductance efficace,

$L_w$ = tension obtenue,

$T_L$ = durée de l'intervalle, c'est-à-dire le temps entre deux impulsions de branchement du transformateur de tension.

3.  Transformateur de tension continue pour la mise en oeuvre du procédé selon la revendication 1, comprenant :

   -   un élément d'accumulation inductif (LS),
   -   au moins un commutateur électronique (S1, S2),
   -   une installation de commande (ST) pour ce ou ces commutateurs électroniques (S1, S2) pour fournir des impulsions de fermeture du ou des commutateurs électroniques, l'installation de commande (SP, AW, OS, VCO) disposant d'au moins une mémoire (SP) dans laquelle sont enregistrées les valeurs caractéristiques de la longueur des impulsions de fermeture des différentes phases partielles ainsi qu'un circuit de sélection (AW) pour transmettre les valeurs caractéristiques mises en mémoire à un oscillateur (OS, VCO) qui fournit les impulsions de fermeture destinées au(x) commutateur(s) électronique(s) (S1, S2).

4.  Transformateur de tension continue selon la revendication 3, caractérisé par un oscillateur commandé en fréquence (VCO) dont l'entrée définissant la fréquence est reliée au circuit de sélection (AW).

5.  Transformateur de tension continue selon la revendication 3, caractérisé par un oscillateur de fréquence fixe relié à un diviseur de fréquence (FT) dont l'entrée qui définit le rapport de division est reliée au circuit de sélection (AW).

6.  Transformateur de tension continue selon l'une des revendications 3 à 5, caractérisé en ce qu'il est réalisé sous la forme d'un transformateur symétrique (GW) dont l'inductance efficace est prédéterminée principalement par l'inductance dispersée du transformateur (LS) et dont la durée de l'intervalle est choisie constante.

7.  Transformateur de tension continue selon l'une des revendications 3 à 5, caractérisé en ce que le transformateur de tension continue est en forme de transformateur symétrique (GW) entraîné par un régulateur amont (VR), les temps de fermeture du transformateur symétrique (GW) n'étant choisis de longueurs différentes que pendant une opération de fermeture dans les phases partielles et à la fin de cette phase de fermeture on commute sur une valeur constante.

Fig. 1

GW

Fig. 2

EP 0 664 935 B1

Fig. 3

Fig. 4

Fig. 5

Fig. 6

EP 0 664 935 B1

EP 0 664 935 B1

$UE$

$QE$

$VR$

$S2$

$Tr$

$G1$

$w1$  $w2$

$CG$

$RL$

$S1$

$G2$

$GW$

$\sim ST$

$PBM$

Fig. 7